# FASCICULE DE BREVET EUROPEEN

(11) **EP 2 975 775 B1**
(45) Date de publication et mention de la délivrance du brevet: **24.05.2017**
(21) Numéro de dépôt: 15176301.8
(22) Date de dépôt: 10.07.2015
(51) Int. Cl.: H04B 1/3816

(54) **PROCEDE D'ETABLISSEMENT D'UNE SESSION DE COMMUNICATION VIA UNE INTERFACE SWP**
VERFAHREN ZUR HERSTELLUNG EINER KOMMUNIKATIONSSESSION ÜBER SWP-SCHNITTSTELLE
METHOD FOR ESTABLISHING A COMMUNICATION SESSION VIA AN SWP INTERFACE

(30) Priorité: 15.07.2014 FR 1456791
(43) Date de publication de la demande: 20.01.2016
(73) Titulaire: OBERTHUR TECHNOLOGIES, 92700 Colombes (FR)
(72) Inventeur: DOS SANTOS, Elder, 92700 COLOMBES (FR); DESTOUCHES, Mickaël, 92700 COLOMBES (FR); GALDO, Florian, 92700 COLOMBES (FR); VALLIERES, Jean-Philippe, 92700 COLOMBES (FR); GODEL, Grégoire, 92700 COLOMBES (FR)
(74) Mandataire: Delumeau, François Guy

(56) Documents cités:
- EP-A1- 2 629 499
- US-A1- 2014 158 764
- "Smart Cards; UICC - Contactless Front-end (CLF) Interface; Part 1: Physical and data link layer characteristics (Release 10);ts_102613v100000p_draftXP", ETSI DRAFT; TS_102613V100000P_DRAFTXP, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SCP, no. V10.0.0, 6 septembre 2012 (2012-09-06), pages 1-57, XP014100746,

## Description

### Arrière-plan de l'invention

L'invention se situe dans le domaine des cartes à microcircuit aptes à s'interfacer avec un module de communication sans contact dans un terminal.

On rappelle en premier lieu que le standard ISO 7816 est un standard très répandu, notamment dans certains documents sécurisés, et dans les cartes à microcircuit utilisées en télécommunication (module UICC ou eUICC) ou pour la sécurisation des transactions bancaires (cartes à puce).

A noter qu'une eUICC peut être un microcircuit soudé directement sur le circuit imprimé du téléphone.

Ce standard ISO 7816 définit en particulier des couches de protocoles aux niveaux « physique », « transport » et « application » pour permettre d'établir une communication entre la carte à microcircuit et un terminal ou lecteur auquel la carte à microcircuit est connectée.

Les couches de protocoles aux niveaux « transport » et « application » permettent l'établissement de canaux de communication entre la carte à microcircuit et le terminal pour que ces entités puissent échanger des messages.

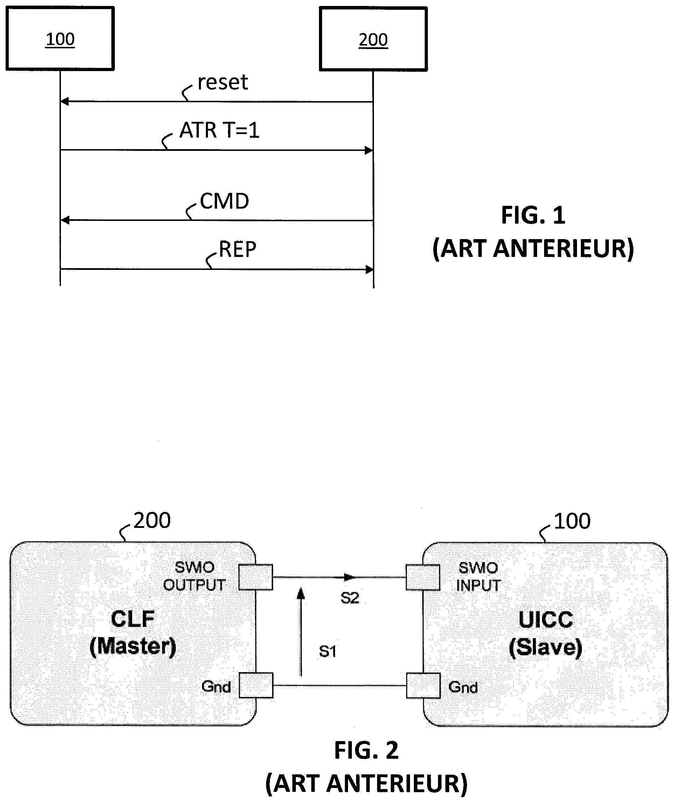

La figure 1 représente une séquence de démarrage (en anglais « startup sequence » du standard ISO 7816 entre une carte à microcircuit 100 et un terminal 200, conformément à l'art antérieur. La communication est une communication de type maitre esclave, dans laquelle la carte à microcircuit répond (message général REP) aux commandes (message général CMD) du terminal maître. Ainsi, par exemple, la carte à microcircuit répond par le massage « ATR T=1 » à la commande « reset » du terminal.

Dans une telle communication de type maître/esclave la carte à microcircuit ne peut prendre l'initiative d'un message ; elle doit nécessairement attendre une commande du terminal pour communiquer avec ce dernier.

La carte à microcircuit étant nécessairement inactive entre deux échanges commande/réponse, le terminal peut, pour économiser de l'énergie, décider de ne plus alimenter la carte à microcircuit pendant l'intervalle de temps entre la réception d'une réponse de la carte et l'envoi de la prochaine commande à la carte.

Ceci pourrait poser des problèmes si la carte non alimentée avait des opérations à effectuer pendant ces intervalles de temps. Pour éviter de tels inconvénients, le protocole ISO 7816 prévoit un mécanisme par lequel la carte à microcircuit peut demander au terminal, en utilisant un octet « procédure byte » prévu à cet effet dans les trames de transport, à être alimentée par le terminal pendant une période de temps additionnelle afin de pouvoir réaliser des opérations.

On connaît par ailleurs de nouvelles générations de carte à microcircuit aptes à communiquer avec un module de communication sans contact CLF selon une interface « SWP » (« Single Wire Protocol ») définie dans le document ETSI TS 102 613 V9.2.0 et présentée à la figure 2. On rappelle en référence à cette figure que l'interface SWP offre une communication en mode full-duplex entre la carte à microcircuit et le module de communication sans contact dans laquelle :
- Le signal S1 est un signal numérique modulé en tension pour les messages envoyés par le module de communication sans contact 200 à la carte à microcircuit 100 ; et
- Le signal S2 est un signal numérique modulé en courant pour les messages envoyés par la carte à microcircuit 100 au module de communication sans contact 200.

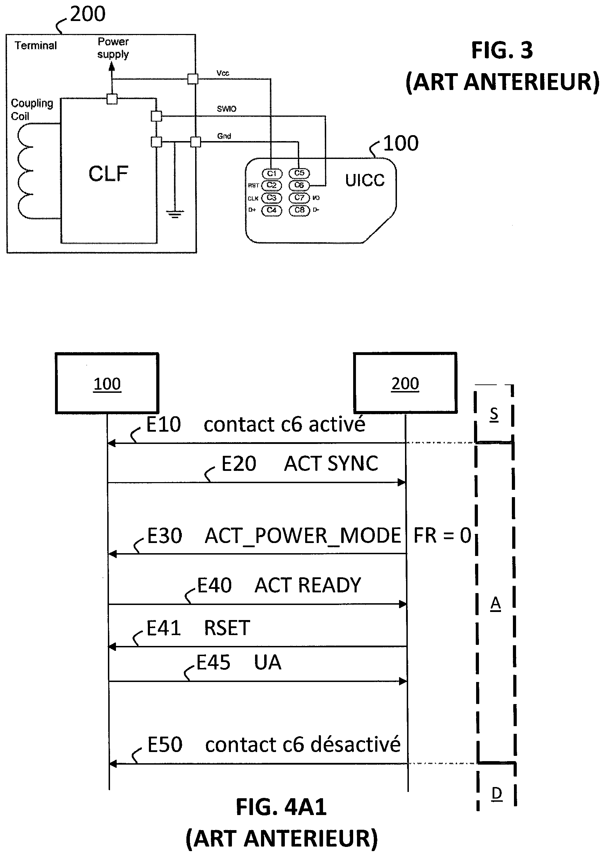

La figure 3 représente l'implémentation matérielle de l'interface SWP de la figure 2, telle que présentée au Chapitre 5.1 du document ETSI TS 102 613 V9.2.0.

Malheureusement, le protocole SWP n'offre pas de mécanisme équivalent à celui du protocole ISO 7816 décrit précédemment qui permettrait à une carte à microcircuit 200 de demander au module de communication sans contact 100 de maintenir son alimentation en dehors des plages nécessaires aux échanges de type maître/esclave entre ces entités.

Par conséquent, l'état actuel de la technique n'offre pas de solution pour garantir à une carte à microcircuit qu'elle sera alimentée suffisamment longtemps par le terminal auquel elle est connectée par une interface SWP pour être en mesure de mener une opération interne à son terme.

La présente invention vise un mécanisme qui ne présente pas les inconvénients mentionnés ci-dessus.

### Objet et résumé de l'invention

Plus précisément, l'invention vise un procédé d'établissement d'une session de communication mis en oeuvre par une carte à microcircuit pour établir une session de communication avec un module de communication sans contact via une interface SWP.

Ce procédé comporte :
- une phase d'initialisation de ladite interface SWP ; et
- une phase de négociation entre la carte à microcircuit et le module de communication sans contact le module de communication sans contact étant apte à maintenir l'alimentation de ladite carte à microcircuit pendant ces deux phases.

Conformément à l'invention, la carte à microcircuit prolonge la phase de négociation jusqu'à la fin d'une procédure interne à la carte à microcircuit.

Corrélativement, l'invention concerne une carte à microcircuit comportant des moyens d'établissement d'une session de communication avec un module de communication sans contact via une interface SWP et des moyens pour exécuter une phase d'initialisation de cette interface SWP en collaboration avec le module de communication sans contact.

La carte à microcircuit selon l'invention est remarquable en ce qu'elle comporte des moyens pour prolonger jusqu'à la fin d'une procédure interne à la carte à microcircuit, une phase de négociation avec le module de communication sans contact, le module de communication sans contact étant apte à maintenir l'alimentation de la carte à microcircuit pendant ces deux phases.

Ainsi, et d'une façon générale, l'invention consiste à prolonger la phase de négociation pendant laquelle on garantit que la carte à microcircuit reste alimentée par le module de communication sans contact pour exécuter les procédures internes à la carte à microcircuit.

Dans un mode particulier de réalisation, la carte à microcircuit envoie au module de communication sans contact des trames RSET (2) afin de prolonger la phase de négociation, tant que la procédure interne n'est pas terminée.

Dans un mode de réalisation, la prolongation de la phase de négociation est mise en oeuvre par une fonction de rappel lancée au démarrage de la procédure interne.

Dans un mode de réalisation, la procédure interne est un programme reçu dans un script.

Dans un mode de réalisation, la procédure interne est une mise à jour d'un système d'exploitation de la carte à microcircuit.

### Brève description des dessins

D'autres caractéristiques et avantages de l'invention apparaîtront à la lumière de la description qui suit, faite en référence aux dessins annexés dans lesquels :
- la figure 1 déjà décrite illustre une séquence de démarrage conforme au standard ISO 7816 de l'art antérieur ;
- les figures 2 et 3 déjà décrites représentent l'architecture logique et l'architecture matérielle d'une interface SWP comme définie dans le document ETSI TS 102 613 V9.2.0 de l'art antérieur ;
- les figures 4A1 et 4A2 illustrent deux séquences de démarrage conformes au protocole SWP de l'art antérieur ;
- la figure 4B illustre un problème avec une telle séquence de démarrage ;
- les figures 5 et 7 illustrent un procédé d'établissement d'un protocole de communication conforme à l'invention ; et
- les figures 6A et 6B représentent un mode particulier d'implémentation du mécanisme de la figure 5.

### Description détaillée d'un mode de réalisation

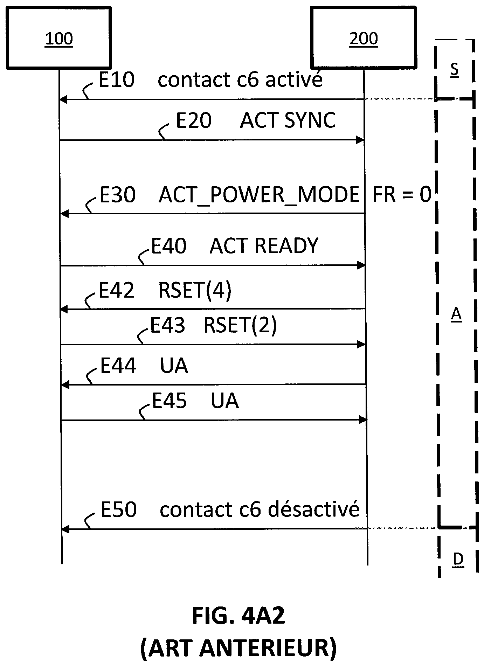

La figure 4A1 représente une séquence de démarrage conforme au standard SWP. Pour plus de renseignements, l'homme du métier pourra se reporter au document ETSI TS 102 613 V9.2.0 et plus particulièrement au chapitre 6.2.3.1 de ce document.

On rappelle que le contact C6 de la carte à microcircuit (voir figure 3) est utilisé pour les échanges entre la carte à microcircuit 100 et le module de communication sans contact 200. On se place dans le contexte dans lequel le module de communication sans contact 200 a activé le contact C6 (signal SWIO passé de l'état L à l'état H) pour demander à la carte à microcircuit 100 d'activer son interface SWP, la carte à microcircuit répondant à cette invitation en plaçant l'interface SWP dans l'état de veille « S » (en anglais « SUSPENDED »).

Conformément au standard, le module de communication sans contact 200 place l'interface SWP dans l'état actif « A » (en anglais « ACTIVATED ») au cours d'une étape E10.

La carte à microcircuit 100 envoie une trame ACT_SYNC au cours d'une étape E20 et attend la première trame du module de communication sans contact 200.

Sur réception de la première trame ACT_SYNC valide, le module de communication sans contact 200 répond (en mode « full power ») par l'envoi d'une trame ACT_POWER_MODE au cours d'une étape E30, le bit FR étant positionné à 0.

La carte à microcircuit 100 répond à cette trame par l'envoi d'une trame ACT_READY au cours d'une étape E40.

Puis, au cours d'une étape E41, le module de communication sans contact envoie une trame RSET à la carte à microcircuit 100 ; celle-ci acquitte cette trame à l'étape E45 par l'envoi d'une trame UA.

Le premier envoi d'une trame UA par la carte à microcircuit 100 (étape E45) marque la fin de la phase d'initialisation.

Sur réception de cette trame par le module de communication sans contact 200, l'interface duplex SWP est initialisée et les deux entités 100 et 200 peuvent émettre des trames SHDLC. (en anglais « Simplified High Level Data Link Control »)

Comme décrit au chapitre 8.3 du document ETSI TS 102 613 V9.2.0 le module de communication sans contact 200 peut désactiver l'interface SWP en maintenant le signal SWIO à l'état L pendant au moins une durée p4, le « deactivation time » (Table 8.2 du document ETSI TS 102 613 V9.2.0 (étape E50). L'interface SWP passe alors dans l'état désactivé « D » (en anglais « DEACTIVATED »).

La figure 4A2 représente une autre séquence de démarrage conforme au standard SWP.

Dans cet exemple, sur réception de la trame ACT_READY à l'étape E40, le module de communication sans contact 200 démarre une phase de négociation par l'envoi, à l'étape E42 d'une trame RSET(4) pour négocier la taille de la fenêtre de « sliding window », conformément au chapitre 10.5 du document ETSI TS 102 613 V9.2.0.

Dans cet exemple, la carte à microcircuit répond par l'envoi d'une trame RSET (2) (étape E43). Le module de communication envoie, à l'étape E44 un message d'acquittement UA.

La fin de la phase d'initialisation est là encore marquée par l'envoi d'un premier message UA par la carte à microcircuit 100 à l'étape E45.

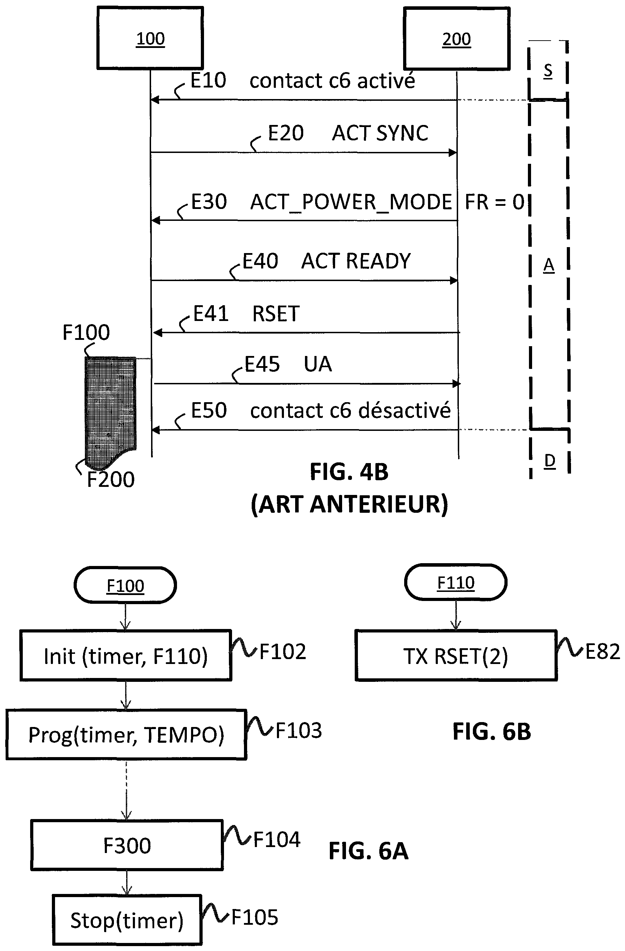

La figure 4B est similaire à la figure 4A1 sauf en ce qu'elle illustre un problème résolu par l'invention, lorsque
- la carte à microcircuit 100 démarre, à l'étape F100, une opération interne, pendant la phase de configuration de l'interface SWP, à savoir plus précisément entre l'activation du contact c6 à l'étape E10 et l'envoi du premier acquittement UA à l'étape E45 ; et
- que le module de communication sans contact 200 stoppe l'alimentation de cette carte à l'étape E50, alors que l'opération interne n'est pas terminée.

Dans ce cas, l'opération interne s'arrête prématurément au cours d'une étape F200 pour défaut d'alimentation.

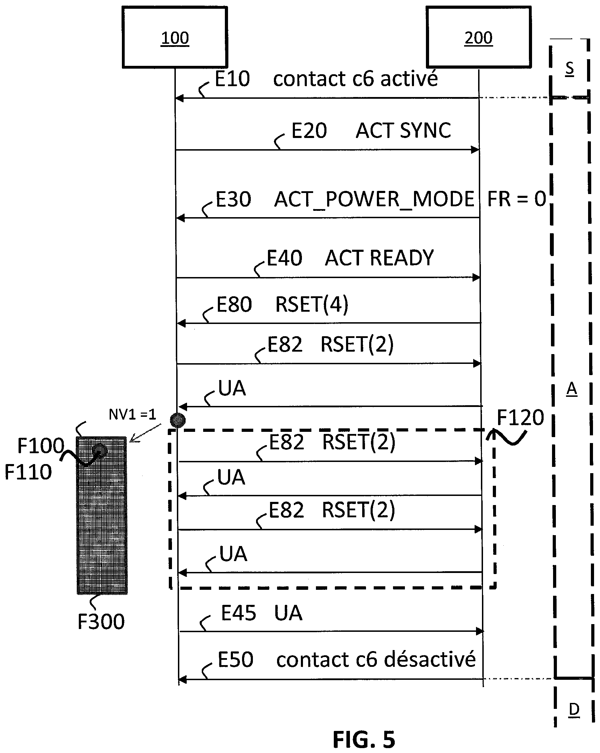

La figure 5 illustre un mode particulier de réalisation de l'invention.

On suppose dans cet exemple que la carte à microcircuit 100 a préalablement reçu un script de commandes comportant des instructions pour effectuer une procédure interne consistant à mettre à jour le système d'exploitation de la carte à microcircuit de façon différée, au prochain démarrage de la carte.

Dans le mode de réalisation décrit ici, sur réception d'un tel script, la carte à microcircuit mémorise les données de mise à jour du système d'exploitation dans une mémoire et initialise une variable NV1 à 1 pour mémoriser le fait que le système d'exploitation doit être mis à jour.

D'une façon générale, l'invention consiste à faire prolonger par la carte à microcircuit 100 une phase de négociation F120 tant que la procédure interne (en l'espèce la mise à jour du système d'exploitation) n'est pas terminée, pour s'assurer que le module de communication sans contact 200 ne désactivera pas l'interface SWP.

Dans le mode de réalisation décrit ici, cette prolongation est obtenue en envoyant des messages RSET(2) aux cours d'étapes E82.

A cet effet, dans l'exemple de la figure 5, la carte à microcircuit 100 teste la valeur de la variable NV1 après réception du premier message UA reçu u module 200.

Lorsque cette variable NV1 égale 1, la carte à microcircuit répond en boucle aux messages d'acquittement successifs UA reçus du module de communication sans contact 200, jusqu'à la fin (étape F300) de la procédure interne.

Les figures 6A et 6B fournissent un mode de réalisation, dans lequel cette répétition est mise en oeuvre par une fonction de rappel (en anglais « callback ») dès le début de la procédure interne.

La figure 6A représente sous forme d'organigramme les principales étapes de la procédure interne dans un mode particulier de réalisation.

Au cours d'une étape F102, on associe à une horloge « timer » la fonction de rappel F110, le timer étant initalisé à l'étape 103 avec une constante de temps TEMPO. Par conséquent, la fonction de rappel F110 est exécutée tous les TEMPO secondes, cette exécution consistant à envoyer la trame RSET (2) à l'étape E82.

Dans l'exemple de réalisation décrit ici, la procédure interne consiste à mettre le système d'exploitation de la carta à microcircuit à jour avec les données précédemment mémorisées.

Après la fin de la procédure interne (étape F300), l'horloge « timer » est supprimée.

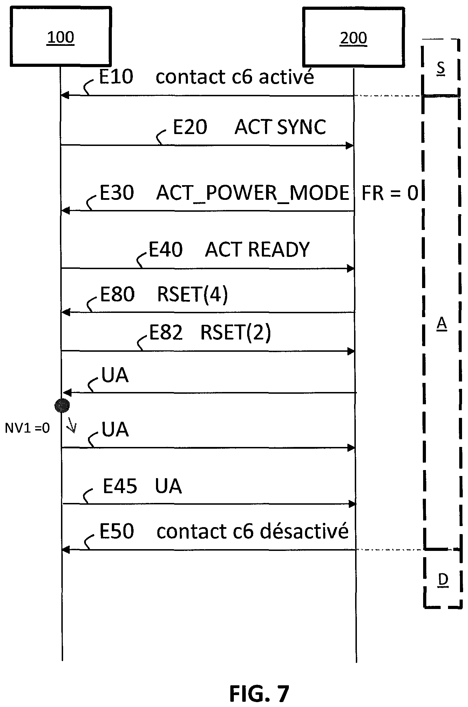

En référence à la figure 7, si la carte à microcircuit détermine que la variable NV1 égale 0, elle acquitte directement le premier message UA reçu du module 200 par l'envoi d'un message UA comme dans l'état actuel de la technique.

## Revendications

1. Procédé d'établissement d'une session de communication mis en oeuvre par une carte à microcircuit (100) pour établir une session de communication avec un module de communication sans contact (200) via une interface SWP, ledit procédé comportant :
- une phase d'initialisation de ladite interface Single Wire Protocol SWP ; et
- une phase de négociation (F120) entre la carte à microcircuit (100) et le module de communication sans contact (200),
ledit module de communication sans contact étant apte à maintenir l'alimentation de ladite carte à microcircuit pendant lesdites phases;
ledit procédé étant **caractérisé en ce que** ladite carte à microcircuit (100) prolonge ladite phase de négociation (F120) jusqu'à la fin (F300) d'une procédure interne à la carte à microcircuit.

2. Procédé selon la revendication 1 **caractérisé en ce que**, pour prolonger ladite phase de négociation, ladite carte à microcircuit envoie au dit module de communication sans contact des trames RSET (2).

3. Procédé selon la revendication 1 ou 2, **caractérisé en ce que** la prolongation de la phase de négociation est mise en oeuvre par une fonction de rappel lancée au démarrage de la procédure interne.

4. Procédé selon l'une quelconque des revendications 1 à 3, **caractérisé en ce que** ladite procédure interne est un programme reçu dans un script.

5. Procédé selon l'une quelconque des revendications 1 à 4, **caractérisé en ce que** ladite procédure interne est une mise à jour d'un système d'exploitation de la carte à microcircuit.

6. Carte à microcircuit (100) comportant des moyens d'établissement d'une session de communication avec un module de communication sans contact (200) via une interface Single Wire Protocol SWP et des moyens pour exécuter une phase d'initialisation de ladite interface SWP en collaboration avec ledit module de communication sans contact, ladite carte étant **caractérisée en ce qu'**elle comporte des moyens pour prolonger jusqu'à la fin (F300) d'une procédure interne à la carte à microcircuit, une phase de négociation (F120) avec le module de communication sans contact (200), ledit module de communication sans contact étant apte à maintenir l'alimentation de ladite carte à microcircuit pendant lesdites phases.

7. Carte à microcircuit (100) selon la revendication 6, **caractérisée en ce que** lesdits moyens pour prolonger la phase de négociation (F120) comportent des moyens pour envoyer dit module de communication sans contact des trames RSET (2) audit le module de communication sans contact (200).

8. Carte à microcircuit (100) selon la revendication 6 ou 7, **caractérisée en ce que** lesdits moyens pour prolonger la phase de négociation (F120) sont mis en oeuvre par une fonction de rappel de ladite procédure interne à la carte.

## Patentansprüche

1. Verfahren zum Herstellen einer durch eine Mikrochipkarte (100) durchgeführten Kommunikationssitzung, um eine Kommunikationssitzung mit einem berührungslosen Kommunikationsmodul (200) über eine SWP-Schnittstelle herzustellen, wobei das Verfahren umfasst:
- eine Phase zur Initialisierung der Single Wire Protocol SWP-Schnittstelle und
- eine Verhandlungsphase (F120) zwischen der Mikrochipkarte (100) und dem berührungslosen Kommunikationsmodul (200),
wobei das berührungslose Kommunikationsmodul geeignet ist, die Versorgung der Mikrochipkarte während der Phasen aufrechtzuerhalten,
wobei das Verfahren **dadurch gekennzeichnet ist, dass** die Mikrochipkarte (100) die Verhandlungsphase (F120) bis zum Ende (F300) einer mikrochipkarteninternen Prozedur verlängert.

2. Verfahren nach Anspruch 1, **dadurch gekennzeichnet, dass** die Mikrochipkarte zur Verlängerung der Verhandlungsphase dem berührungslosen Kommunikationsmodul RSET Frames (2) sendet.

3. Verfahren nach Anspruch 1 oder 2, **dadurch gekennzeichnet, dass** die Verlängerung der Verhandlungsphase durch eine Rückruffunktion, die beim Start der internen Prozedur gestartet wird, durchgeführt wird.

4. Verfahren nach einem der Ansprüche 1 bis 3, **dadurch gekennzeichnet, dass** die interne Prozedur ein in einem Skript empfangenes Programm ist.

5. Verfahren nach einem der Ansprüche 1 bis 4, **dadurch gekennzeichnet, dass** die interne Prozedur eine Aktualisierung eines Betriebssystems der Mikrochipkarte ist.

6. Mikrochipkarte (100), die Mittel zum Herstellen einer Kommunikationssitzung mit einem berührungslosen Kommunikationsmodul (200) über eine Single Wire Protocol SWP-Schnittstelle sowie Mittel zum Ausführen einer Phase zur Initialisierung der SWP-Schnittstelle in Zusammenarbeit mit dem berührungslosen Kommunikationsmodul umfasst, wobei die Karte **dadurch gekennzeichnet ist, dass** sie Mittel umfasst, um eine Verhandlungsphase (F120) mit dem berührungslosen Kommunikationsmodul (200) bis zum Ende (F300) einer mikrochipkarteninternen Prozedur zu verlängern, wobei das berührungslose Kommunikationsmodul geeignet ist, die Versorgung der Mikrochipkarte während der Phasen aufrechtzuerhalten.

7. Mikrochipkarte (100) nach Anspruch 6, **dadurch gekennzeichnet, dass** die Mittel zur Verlängerung der Verhandlungsphase (F120) Mittel zum Senden von RSET Frames (2) an das berührungslose Kommunikationsmodul (200) umfassen.

8. Mikrochipkarte (100) nach Anspruch 6 oder 7, **dadurch gekennzeichnet, dass** die Mittel zur Verlängerung der Verhandlungsphase (F120) durch eine Rückruffunktion der karteninternen Prozedur angewendet werden.

## Claims

1. A method of setting up a communication session performed by a microcircuit card (100) for setting up a communication session with a contactless communication module (200) via an SWP interface, said method comprising:
· an initialization phase of said Single Wire Protocol SWP interface; and
· a negotiation phase (F120) between the microcircuit card (100) and the contactless communication module (200);
said contactless communication module being suitable for maintaining the power supply to said microcircuit card during said phases;
the method being **characterized in that** said microcircuit card (100) prolongs said negotiation phase (F120) until the end (F300) of a procedure internal to the microcircuit card.

2. A method according to claim 1, **characterized in that** in order to prolong said negotiation phase, said microcircuit card sends RSET frames (2) to said contactless communication module.

3. A method according to claim 1 or 2, **characterized in that** the negotiation phase is prolonged by a callback function launched on startup of the internal procedure.

4. A method according to any one of claims 1 to 3, **characterized in that** said internal procedure is a program received in a script.

5. A method according to any one of claims 1 to 4, wherein said internal procedure is updating an operating system of the microcircuit card.

6. A microcircuit card (100) including means for setting up a communication session with a contactless communication module (200) via a Single Wire Protocole SWP interface, and means for executing an initialization phase of said SWP interface in collaboration with said contactless communication module, said card being **characterized in that** it includes means for prolonging a negotiation phase (F120) with the contactless communication module (200) until the end (F300) of a procedure internal to the microcircuit card, said contactless communication module (200) being suitable for maintaining the power supply of said microcircuit card during said phases.

7. A microcircuit card (100) according to claim 6, **characterized in that** said means for prolonging the negotiation phase (F120) comprises means for sending RSET frames (2) to the contactless communication module (200).

8. A microcircuit card according to claim 6 or 7, **characterized in that** said means for prolonging the negotiation phase (F120) is implemented by a callback function of said procedure internal to the card.
